Europäisches Patentamt

European Patent Office

Office européen des brevets

(11) Veröffentlichungsnummer: **0 284 633**

**A1**

(12) # EUROPÄISCHE PATENTANMELDUNG

(21) Anmeldenummer: **87104757.7**

(22) Anmeldetag: **31.03.87**

(51) Int. Cl.4: **G01L 19/06**

(43) Veröffentlichungstag der Anmeldung:
**05.10.88 Patentblatt 88/40**

(84) Benannte Vertragsstaaten:
**AT CH DE FR GB LI**

(71) Anmelder: **Kristal Instrumente AG**
**Eulachstrasse 22**
**CH-8408 Winterthur(CH)**

(72) Erfinder: **Vollenweider, Kurt Walter**
**Im Gütli 155**
**CH-8451 Humlikon(CH)**
Erfinder: **Calderara, Reto, Dipl.-Chem.**
**Sonnhaldenstrasse 9**
**CH-8413 Neftenbach(CH)**
Erfinder: **Sonderegger, Hans Conrad,**
**Dipl.-Ing.**
**Sonnhaldenstrasse 7**
**CH-8413 Neftenbach(CH)**
Erfinder: **Wenger, Alfred, Dr. Phys.**
**Wieshofstrasse 58**
**CH-8408 Winterthur(CH)**

(74) Vertreter: **Schmidt, Horst, Dr.**
**Siegfriedstrasse 8**
**D-8000 München 40(DE)**

(54) **Druckmediumdichter modularer Einbauadapter für einen Druckaufnehmer sowie Verfahren zu seiner Herstellung.**

(57) Ein Druckaufnehmer, insbesondere Drucktransmitter, ist mit einem an unterschiedliche Einbauverhältnisse anpassbaren modularen Einbauadapter versehen, der ein Sensorteil (2) umfasst. Die Abdichtung zwischen Sensorteil (2) und Grundkörper (1) des Einbauadapters gegenüber dem Druckmedium erfolgt mittels einer Stumpfschweissung (24,25), wozu der Sensorteil (2) und/oder der Grundkörper (1) mit einer ringförmigen Schweisserhöhung versehen wird, die bei der Montage mit einer ebenen ringförmigen Stirnfläche am betreffenden anderen Teil in Berührung gebracht wird. Vorzugsweise befinden sich Schweisserhöhungen an beiden Stirnseiten des dadurch universell verwendbaren Sensorteiles (2), welches eine ebene Absatzfläche an einer mediumzu-oder -abgewandten Stelle des Grundkörpers (1) zugeordnet ist. An einer der Paarungen aus Schweisserhöhung und zugeordneter Absatzfläche wird eine Widerstandsschweissung vorgenommen. Die durch die Schweissung geschaffene Abdichtung genügt höchsten Anforderungen an die Betriebszuverlässigkeit, wie sie z.B. in der Kerntechnik, in chemischen Betrieben, bei Bremssystemen an Strassen-und Schienenfahrzeugen und dgl. gestellt werden.

Fig. 3

## Druckmediumdichter modularer Einbauadapter für einen Druckaufnehmer sowie Verfahren zu seiner Herstellung.

Die Erfindung betrifft einen Einbauadapter für einen Druckaufnehmer, insbesondere Drucktransmitter, zur Messung des Druckes in einem Strömungsmedium, sowie ein Verfahren zu seiner Herstellung. Die Erfindung betrifft insbesondere einen Einbauadapter sowie einen damit ausgestatteten Druckaufnehmer, dessen Verstärkerelektronik mit dem Sensorteil des Einbauadapters elektrisch verbunden ist, der sich durch eine besondere Dichtigkeit gegenüber dem Druckmedium auszeichnet.

Es sind viele Bauarten von Druckaufnehmern, sowohl auf piezoelektrischer wie auf piezoresistiver Basis bekannt, ebenso von Drucktransmittern, bei denen die elektronische Signalauswertung entweder teilweise oder ganz in den Aufnehmer integriert ist. Prinzipiell besteht ein solcher Druchtransmitter aus einer druckaufnehmenden Membran, einem druckübertragenden Medium, z. B. Oel, einer beispielsweise piezoresistiven Messzelle mit elektrischen Zu-und Ableitungen, einem angekoppelten Elektronikteil für Signalverarbeitung und einem Stecker für die elektrische Verbindung nach aussen. Die aufgeführten Teile können sich in einem einzigen geschlossenen Gehäuse befinden, das in ein Gewinde eines Rohres oder Gehäuses eingeschraubt wird, welches das Medium enthält, dessen Druck gemessen werden soll.

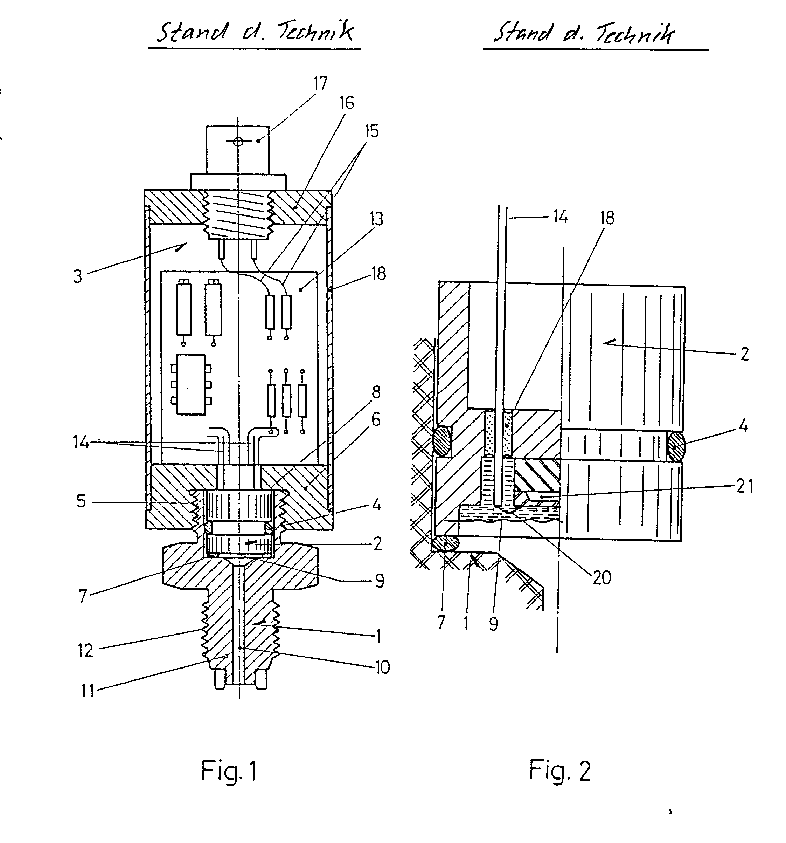

Es zeigte sich, dass ein modularer Aufbau des beschriebenen Drucktransmitters insofern vorteilhaft ist, als sich die verschiedensten Einbaubedürfnisse - Einbau stutzen verschiedener Länge, mit unterschiedlichen Durchmessern, vorschiedenen Gewindearten usw. - da durch auf rationellere Art befriedigen lassen. Grundsätzlich besteht ein solcher modularer Aufbau (Fig. 1) aus einem Elektronikgehäuse mit Gehäusemantel sowie Deckplatte mit Steckeranschluss, Bodenplatte mit Bohrung und Gewinde für die Aufnahme des Einbauadapters, welcher auch den in Fig. 2 detailliert dargestellten Sensorteil enthält. Auf der Seite des Druckmediums ist der Einbauadapter mit einem den Einbaubedürfnissen angepassten Gewindestutzen versehen. Der oben beschriebene modulare Aufbau stellt den gebräuchlisten Stand der Technik dar und wird durch die Figuren 1 und 2 illustriert.

Fig. 1 stellt einen modular aufgebauten Drucktransmitter dar, Fig. 2 dessen Sensorteil als Detail, in Form einer modularen piezoresistiven Messzelle.

In Fig. 1 bedeuten 1 den Einbauadapter bzw. dessen Grundkörper, 2 den Sensorteil und 3 den Elektronikteil. Der Einbauadapter 1 enthält in dem Teil, der dem Elektronikteil 3 zugewandt ist, den Sensorteil 2, der mit einem Dichtring 4 abgedichtet ist, welcher das Eindringen des zu messenden gasförmigen oder flüssigen Mediums in den Elektronikteil 3 verhindern soll. Mittels des Adaptergewindes 5 wird der Einbauadapter 1 in die Grundplatte 6 des Elektronikteils 3 eingeschraubt, wobei die Längserstreckung des Sensorteils 2 so bemessen sein kann, dass unter Verwendung eines weiteren Dichtringes 7 der Sensorteil beim Einbau zwischen dem genannten Dichtring und Anschlag 8 unter Vorspannung gebracht werden kann. Der Membranteil 9 des Sensorteils nimmt den Druck auf, den das Medium durch den Druckkanal 10 des Einbauadapters 1 hindurch ausübt. Der Einbauadapter 1 trägt an seinem dem Medium zugewandten Abschnitt einen Einbaustutzen 11 mit einem Einbaugewinde 12, das in eine entsprechende (in der Zeichnung nicht dargestellte) Gewindebohrung des Gehäuses oder Rohres eingebaut werden kann. Gerade darin, dass der Stutzen 11 unterschiedlich dimensioniert und das Einbaugewinde 12 unterschiedlich ausgestaltet werden und dadurch den verschiedensten Einbaubedürfnissen genügen können, liegt der Hauptvorteil des modularen Aufbaus. Der an den Einbauadapter 1 und den Sensorteil anschliessende Elektronikteil 3 enthält im wesentlichen eine mit Elektronikbestandteilen bestückte Montageplatte 13. Die derart in den Drucktransmitter integrierte Elektronik dient der Signalauswertung und -aufbereitung, wobei die elektrischen Signale vom Sensorteil 2 her durch drahtförmige Signalzuführungen 14 der Elektronik zugeleitet und die aufbereiteten Signale über ebensolche Signalabführungen 15 einem in die Deckplatte 16 eingeschraubten Stecker 17 zugeführt werden. Grundplatte 6, Deckplatte 16 und Gehäusemantel 28 bilden zusammen den hermetisch abgedichteten Elektronikteil 3.

Fig. 2 zeigt einen Ausschnitt aus Fig. 1, wobei hauptsächlich die Abdichtung gegen das Druckmedium sichtbar gemacht wird. Die Ziffern haben dieselbe Bedeutung wie bisher. 1 bedeutet somit den in seiner inneren Begrenzung dargestellten Einbauadapter, 2 den Sensorteil, der auf der linken Seite der Figur im Längsschnitt, auf der rechten Seite in seitlicher Aufsicht dargestellt ist, 4 und 7 die Dichtringe, 9 die Membran und 14 eine elektrische Signalableitung. Neu eingezeichnet ist die elektrische Isolation 18 (zumeist Glas) der Signalableitung 14, die druckübertragende Isolierflüssigkeit 20 sowie das piezoresistive Messelement 21.

Figur 1 und 2 repräsentieren den Stand der Technik, der durch den modularen Aufbau des Drucktransmitters und die Abdichtung des Elektronikteils vom flüssigen oder gasförmigen Druckmedium durch Dichtringe gekennzeichnet ist. Die Figuren stellen bestimmte Ausführungsformen dar, etwa dadurch charakterisiert, dass der Sensorteil mit der Membran nicht frontseitig im Einbauadapter dargestellt wird, sondern in einem rückwärtigen Bereich. Bei niedrigen Drücken, nicht aggressiven und nicht zu heissen Druckmedien kann der Sensorteil mit Membran auch frontseitig des Einbauadapters angebracht werden.

In vielen Fällen genügt die beschriebene und in den Figuren 1 und 2 dargestellte Dichtungsart, um das Druckmedium nicht in den empfindlichen Elektronikteil eindringen zu lassen. Es liegt aber im Wesen der Dichtungen, die meist als O-Ringe ausgebildet sind, dass bei wechselnden, die Membran beaufschlagenden Drücken, insbesondere bei pulsierenden Drücken, diese Ringe sich bewegen, deformieren und auf ihrer relativ rauhen Unterlage einem Abrieb ausgesetzt sind, der sie undicht macht und das mehr oder weniger aggressive Medium passieren lässt ("Lecktropfen"). Der Angriff auf die Ringe kann zusätzlich durch hohe und wechselnde Temperaturen sowie durch die chemische Aggressivität gewisser Medien noch unterstützt werden. Das Druckmedium kommt dann mit den elektronischen Bauteilen, den Leiterbahnen und Lötstellen in Kontakt und zerstört die Funktionsfähigkeit des Elektronikteiles durch Korrosion. Für Anwendungen, die hohe Betriebssicherheit verlangen, ist somit die bisherige Dichtungsart ungeeignet.

Es ist ein Ziel der vorliegenden Erfindung, einen Einbauadapter für einen Druckaufnehmer, insbesondere Drucktransmitter, zu schaffen, der die beschriebenen Nachteile bekannter Anordnungen vermeidet und in einfacher Weise als modulares Bauteil hergestellt werden kann.

Ein Einbauadapter nach der Erfindung für einen Druckaufnehmer zur Messung des Druckes in einem Strömungsmedium mit einem eine Durchgangspassage aufweisenden Grundkörper, in dem ein dem Medium einerends ausgesetztes Sensorteil zur Lieferung eines dem Mediumdruck entsprechenden elektrischen Signales aufgenommen ist, und mit einer Abdichtung zwischen Sensorteil und Grundkörper zeichnet sich dadurch aus, daß gegenüberliegende im wesentlichen ringförmige Stirnflächenbereiche des Sensorteiles und des Grundkörpers mediumdicht durch eine Stumpfschweissung miteinander verbunden sind.

Einer der Stirnflächenbereiche kann eine im Grundkörper vorgesehene Absatzfläche sein, der eine mediumzu-oder -abgewandte Stirnseite des Sensorteiles zugeordnet ist. Eine Vorspanneinrichtung kann vorgesehen sein, um auf die Stumpfschweissung seitens der der Schweissung abgewandten Stirnseite des Sensorteiles eine Vorspannkraft auszuüben. Eine Membranpartie des Sensorteiles kann bündig mit dem Stirnseite des Adapters abschließen, oder gegenüber dem Stirnende zurückversetzt sein. Ein zwischen Sensorteil und Grundkörper vorhandener Spalt kann durch einen in einem der beiden Teile angeordneten O-Ring abgedichtet sein.

Das erfindungsgemässe Verfahren zum Herstellen eines derartigen Einbauadapters zeichnet sich dadurch aus, dass der Sensorteil oder der Grundkörper oder beide mit wenigstens einer umfänglichen Schweisserhöhung versehen wird, dass bei der Montage des Sensorteiles im Grundkörper wenigstens ein ebener Stirnflächenbereich an etweder dem Sensorteil oder Grundkörper mit einer gegenüberliegenden Schweisserhöhung am betreffenden anderen Teil in Berührung gebracht wird, und dass an wenistens einer der höchstens zwei an gegenüberliegenden Seiten des Sensorteiles gebildeten Paarungen aus ebenen Stirnflächenbereichen und Schweisserhöhungen eine mediumdichte Widerstandsschweissung vorgenommen wird.

Die Schweisserhöhungen haben vorzugsweise im Querschnitt eine buckelartige Ausbildung. Besonders vorteilhaft ist es, wenn Schweisserhöhungen an beiden gegenüberliegenden Stirnseiten des Sensorteiles vorgesehen werden. Dadurch wird ein modularer Einbauadapter geschaffen, der eine universelle Montage am Drucktransmitter ermöglicht. Wenigstens eine der Schweisspaarungen kann jedoch, wenn erwünscht, auch eine Schweisserhöhung an einer Absatzfläche des Grundkörpers umfassen, der dementsprechend ein ebener Stirnflächenbereich (ohne Schweisserhöhung) am Sensorteil zuzuordnen ist. Die Schweissung kann an der mediumzu-oder -abgewandten Seite des Sensorteiles vorgenommen werden, wobei zur Erzielung einer besonders hohen Druckdichtigkeit der Schweisstelle auf die Schweissung eine Vorspannkraft ausgeübt werden kann. Zur Vermeidung elektrischer Überschläge beim Schweissen kann zwischen Sensorteil und Grundkörper ein isolierender Spalt durch ein Zentrierhilfsmittel in Gestalt eines O-Ringes oder dgl. eingehalten werden.

Gegenstand der Erfindung ist ferner ein mit einem vorbeschriebenen Einbauadapter ausgestatteter Drucktransmitter.

Die Erfindung wird nachfolgen anhand von Ausführungsbeispielen und der Zeichnung näher erläutert. Es zeigen:

Fig. 1 in längsgeschnittener Ansicht einen bekannten Drucktransmitter mit Einbauadapter,

Fig. 2 eine teilweise geschnittene Detailansicht des in Fig. 1 gezeigten Einbauadapters,

Fig. 3 in längsgeschnittener Ansicht einen Drucktransmitter mit modularem Einbauadapter gemäß einer Ausführungsform der Erfindung,

Fig. 4 eine Ansicht ähnlich Fig. 3 eines Drucktransmitters mit Einbauadapter gemäß einer weiteren Ausführungsform der Erfindung,

Fig. 5 in geschnittener Detailansicht den Einbauadapter nach Fig. 3 (linke Hälfte) und Fig. 4 (rechte Hälfte), und

Fig. 6 eine modifizierte Ausführungsform des Einbauadapters nach Fig. 4, bei dem die Frontpartie des Sensorteiles mit einem rückwärtig verschweissbaren Flansch versehen ist.

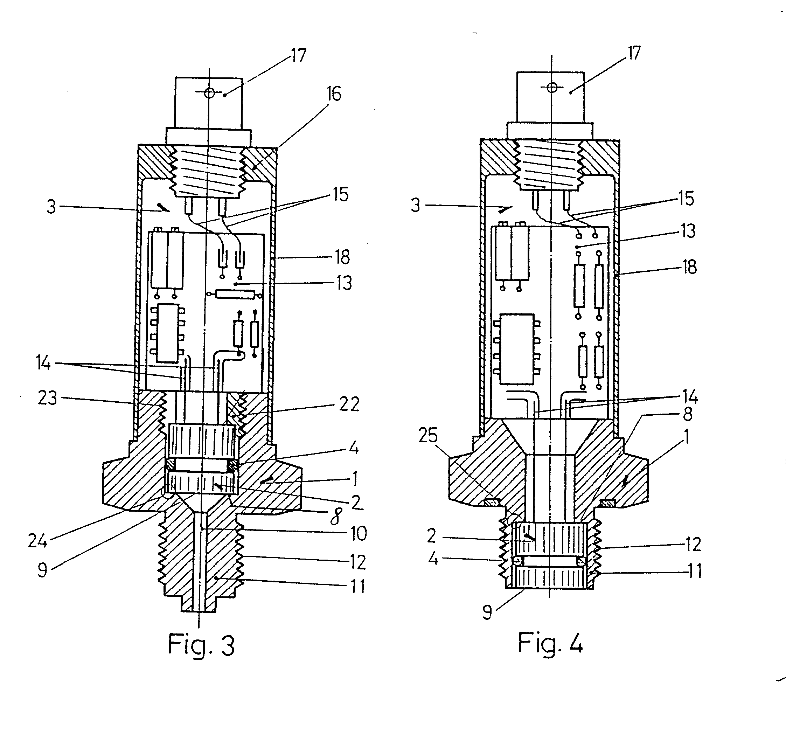

Die Figuren 3, 4, 5 stellen das zentrale Anliegen der Erfindung dar, welches darin besteht, die Dichtung gegenüber dem (in den Zeichnungen nicht dargestellten) Druckmedium nicht mehr durch unzuverlässige Dichtringe, sondern durch ringförmige Verschweissungen zwischen Sensorteil und Einbauadapter vorzunehmen. Die dargestellten Ausführungsformen betreffen alle einen Drucktransmitter mit piezoresistivem Wandlerelement. Die Erfindung kann aber auch auf Ausführungsformen mit piezoelektrischen oder anderen Wandlerelementen angewandt werden. Je nach den anwendungstechnischen Anforderungen gestaltet sich speziell der Einbauadapter, die Lage des Sensorteiles sowie die Lage der Verschweissung verschieden. Die Ziffern bezeichnen in allen Figuren funktionell identisch Teile und bedeuten dasselbe wie bis anhin.

So stellt Fig. 3 einen Drucktransmitter mit Einbauadapter mit zurückversetztem Sensorteil 2 dar. Diese Ausführungsform wird beispielsweise bei höheren Drücken angewendet, bei denen man Einbaustutzen 11 mit relativ geringem Durchmesser wählt, damit die wirkenden Kräfte nicht zu gross werden. Dann ist es aus Platzgründen angezeigt, den Sensorteil 2 in einem rückwärtigen Bereich des Einbauadapters 1 unterzubringen. Auch bei heissen Medien kann diese Lage des Sensorteils 2 vorteilhaft sein, weil dann die temperaturempfindlichen Teile des Drucktransmitters, wie z.B. die elektrischen Isolationen, einer weniger hohen Temperatur ausgesetzt sind. Bei dieser Ausführungsform wird der Sensorteil 2 durch eine rückwärtige Bohrung mit einem Gewinde 23 bis zu einem Anschlag 8 in den Einbauadapter 1 eingeführt. Der Sensorteil 2 ist vor dem Einbauvorgang bereits vorgeprüft und beispielsweise mit einer frontseitigen und einer rückseitigen umfänglichen Schweisserhöhung in Gestalt z.B. eines Ringbuckels versehen worden. Auf die Einzelheiten dessen Herstellung wird später näher eingegangen werden. Der in einer Nute liegende Dichtring 4 (im vorliegenden Beispiel ein O-Ring) erleichtert eine zentrierte Einführung des Sensorteils 2 und ist so bemessen, dass er einen allseitig gleichmässigen und für die nachfolgende Widerstandsschweissung genügenden radialen Abstand zwischen den Wänden der Bohrung und des Sensorteils 2 gewährleistet und einen elektrischen Ueberschlag verhindert. Die im Falle der Fig. 3 frontale Schweissung nach Einführung des Sensorteils 2 bis zum Anschlag 8 ist eine Widerstandsschweissung (Stumpfschweissung) und erfolgt so, dass die eine rohrförmige Schweisselektrode konzentrisch mit der Systemachse an die Rückfläche des Sensorteils 2 gehalten wird, die andere Schweisselektrode auf entsprechende Weise an die Basisfläche des Einbaustutzen 11. Der Grund, warum in der dargestellten Ausführungsform die Schweissung vorteilhafterweise an der Frontfläche des Sensorteils 2 vorgenommen wird, liegt darin, dass auf diese Weise das Druckmedium nicht in den Ringspalt zwischen Sensorteil 2 und Einbauadapter 1 eindringen kann. Die Druckübertragung vom Medium auf den Sensorteil 2 erfolgt über einen rückseitig konisch ausgeweiteten Druckkanal 10. Im weiteren zeigt die Figur 3 eine Vorspann-Gewindering 22, passend in ein Innengewinde 23 im oberen Teil der Bohrung im Einbauadapter 1, mit dessen Hilfe die Frontschweissung 24 des Sensorteils 2 unter eine mechanisch Druckspannfung gesetzt werden kann, wodurch auch im Dauerbetrieb sehr hohe, evt. zusätzlich pulsierende Drücke gemessen werden können, ohne dass das Druckmedium in dem Elektronikteil 3 eindringen kann. Der weitere Aufbau des Drucktransmitters entspricht der Fig. 1, abgesehen davon, dass der Elektronikteil 3 keine Grundplatte benötigt (Ziffer 6 in Fig. 1), da der Gehäusemantel 18 umfänglich direkt mit dem Einbauadapter 1 verbunden ist.

Fig. 4 zeigt eine erfindungsgemässe Ausführungsform eines Drucktransmitters, bei welcher der Sensorteil 2 mediumseitig im Einbauadapter 1 untergebracht ist, wodurch das Druckmedium direkt auf den Sensorteil 2 wirkt und der Druckkanal 10 entfällt. Diese Ausführungsform wird beispielsweise bei niedrigen Drücken angewandt. Der Sensorteil 2 wird hier von vorne, d.h. von der Mediumseite her, in eine Bohrung im Einbaustutzen 11 eingeführt, wobei wiederum der Dichtring 4 (O-Ring) zentrierend wirkt und einen - schweisstechnisch notwendigen radialen Abstand der Wände des Sensorteils 2 und des Einbaustutzens 11 erzeugt. Die Schweissung erfolgt hier auf der Rückseite des Sensorteils 2, zwischen diesem Teil und seinem rückwärtigen Anschlag und ist wieder eine Widerstandsschweissung (Stumpfschweissung). Der übrige Aufbau des Drucktransmitters entspricht jenem der Fig. 3, wobei lediglich die Möglichkeit der Druckvorspannung durch einen Vorspanngewindering (Ziffer 22 in Fig. 3) fehlt.

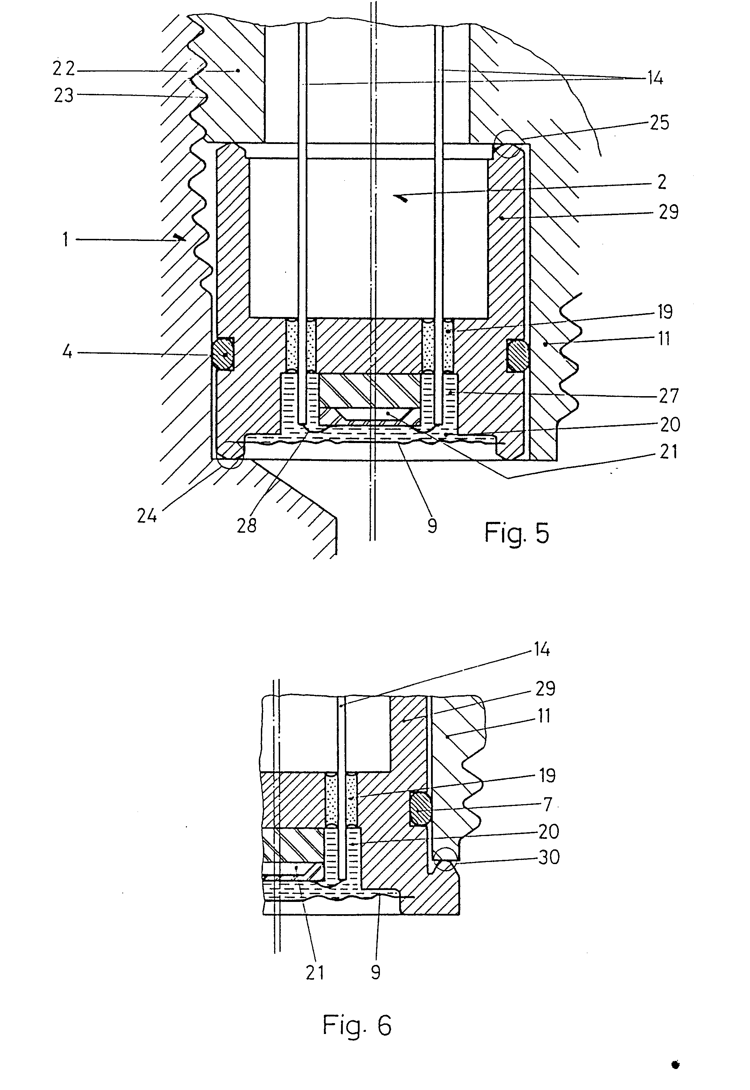

Fig. 5 zeigt den in den Figuren 3 und 4 verwendeten Sensorteil 2 und die Schweissmöglichkeiten detaillierter. Dargestellt ist wieder ein auf dem piezoresistiven Prinzip beruhender Sensor mit einer Membran 9, welche den Druck über eine Flüssigkeit 20 auf das piezoresistive Wandlerelement 26 überträgt. Die Flüssigkeit, die auch den Ringspalt 27 ausfüllt, muss elektrisch isolierend sein, z.B. ein Oel, weil sie Signalleitungen 14 mit Leitungsdrähten 28 enthält. Vom Sensorkörper 29 werden die Signalleitungen 14, z.B. mittels Glasdurchführungen 19, isoliert. Die linke Seite der Figur zeigt den Einbau und die Verschweissung des Sensorteils 2 gemäss der Fig. 3, d.h. mit rückversetztem Sensorteil, die rechte Seite zeigt den Einbau und die Verschweissung des genannten Teiles gemäss der Fig. 4, d.h. mit frontal eingebautem Sensorteil 2. Auf der linken Seite erfolgt die Schweissung frontal, 24, auf der rechten Seite rückseitig, 25, wie bei der Beschreibung der Figuren 3 und 4 erwähnt.

Der Sensorteil 2 ist ein vorgeprüftes, einbaufertiges Modul. Dazu gehört auch, dass die allenfalls zu verschweissenden Stellen zur Schweissung vorbereitet sind. Aus diesem Grunde sind sowohl auf der Front-wie auf der Rückseite des Sensorteils ringförmige Schweissbuckel angebracht. Diese können entweder durch spanabhebende Operationen (z.B. Drehen) auf der Front-und Rückseite hergestellt werden oder dadurch, dass man ringförmige, schweiss-oder lötbare Massen in Buckelform aufbringt, was beispielsweise durch Elektronenstrahlschweissen geschehen kann. Die Durchmesser dieser schweissbaren Ringe sind, je nach Anwendungsfall, naturgemäss verschieden und können nor miert werden. Geeignet sind konische Schweissbuckel, jedoch können auch andere, beispielsweise halbkreisförmige, verwendet werden.

Auf der rechten Seite der Figur 5 ist die Membranpartie 9 bündig mit der Innenwand eines Druckgefässes oder Druckrohres dargestellt, entsprechend der Fig. 4. Es gibt jedoch Anwendungsfälle, wo Bündigkeit nicht erforderlich evt. nicht erwünscht ist. Durch Zurückversetzung des Sensorteils 2 entsteht ein freier Raum, der beispielsweise zur Unterbringung von Dämpfungs-und Kühlelementen verwendet werden kann oder bei partikelführenden Medien, die Beschädigung der Membranpartie 9 verhindert.

Fig. 6 zeigt eine erfindungsgemässe Ausführungsform, welche das Eindringen des Druckmediums in den - schmalen - Spalt zwischen Sensorteil 2 und Einbaustutzen 11 des Einbauadapters verhindert, wie es bei der Ausführungsform mit rückwärtiger Schweissung gemäss Fig. 4 oder gemäss der rechten Seite von Fig. 5 in beschränktem Masse möglich ist. Dies wird erreicht durch eine rückwärtige frontale Schweissung 30. Der frontale umfängliche Teil des Sensorkörpers 29 wird dabei zu einem Flansch 31 erweitert, auf welchem ein ringförmiger Schweissbuckel angebracht wird. Damit kann der genannte Spalt front-, d.h. mediumseitig abgedichtet werden durch Widerstandsschweissung, die analog zu den vorhergehenden Fällen erfolgt.

Die Schaffung einer hermetisch dichten Schweissverbindung zwischen Sensorteil 2 und Einbauadapter 1 bei einem Drucktransmitter erhöht dessen Betriebssicherheit in entscheidendem Masse, indem die empfind lichen Teile des Transmitters, beispielsweise der Elektronikteil, vor Beschädigung oder Zerstörung durch das Druckmedium geschützt werden. Solche empfindlichen Teile gibt es auch in einem Druckaufnehmer, so dass die Erfindung auch Druckaufnehmer einbezieht. Höchste Betriebssicherheit wird beispielsweise gefordert von Bremssystemen im Strassen-und Eisenbahnverkehr, aber auch dann, wenn das Druckmedium umweltgefährdend ist, wie etwa in der Nukleartechnik oder in der chemischen Industrie.

Der bereits eingeführte modulare Aufbau von Druckaufnehmern und -Transmittern wird durch die Schaffung des erfindungsgemässen - schweissfertigen und modularen Sensorteils, der bereits mit Schweissbuckeln versehen ist, entscheidend verbessert. Die Herstellung der Aufnehmer und Transmitter kann rationeller gestaltet werden, aber auch die Qualität der Schweissverbindung wird durch vorgängig hergestellte, richtig dimensionierte und für den Schweissvorgang gut präparierte Schweissbuckel erheblich gesteigert.

Bei den beschriebenen Ausführungsformen sind die zur Stumpfschweissung vorbereiteten Partien, vorzugsweise Ringbuckel, auf dem Sensorteil aufgebracht. Erfindungsgemäss können die Ringbuckel jedoch auch auf der Gegenseite, also auf dem Einbauadapter, aufgebracht werden.

**Ansprüche**

1. Einbauadapter für einen Druckaufnehmer zur Messung des Druckes in einem Strömungsmedium, mit einem eine Durchgangspassage aufweisenden Grundkörper, in dem ein dem Medium einerends ausgesetztes Sensorteil zur Lieferung eines dem Mediumdruck entsprechenden elektrischen Signales aufgenommen ist, und mit einer Abdichtung zwischen Sensorteil und Grundkörper, dadurch gekennzeichnet, daß gegenüberliegende im wesentlichen ringförmige Stirnflächenbereiche des Sensorteils (2) und des Grundkörpers (29) mediumdicht durch eine Stumpfschweissung (24,25,30) miteinander verbunden sind.

2. Einbauadapter nach Anspruch 1, dadurch gekennzeichnet, daß einer der Stirnflächenbereiche eine im Grundkörper (1) vorgesehene Absatzfläche (8) ist.

3. Einbauadapter nach Anspruch 2, dadurch gekennzeichnet, daß die Absatzfläche (8) der mediumzugewandten Stirnseite des Sensorteiles (2) zugeordnet ist.

4. Einbauadapter anch Anspruch 2, dadurch gekennzeichnet, daß die Absatzfläche (8) der mediumabgewandten Stirnseite des Sensorteiles (2) zugeordnet ist.

5. Einbauadapter nach einem der Ansprüche 1 bis 4, gekennzeichnet durch eine Vorspanneinrichtung (22,23) zur Ausübung einer Vorspannkraft auf die Stumpfschweissung (24,25) seitens der der Schweissung abgewandten Stirnseite des Sensorteiles (2).

6. Einbauadapter nach Anspruch 1, 2 oder 4, dadurch gekennzeichnet, daß eine Membranpartie (9) des Sensorteiles (2) bündig mit dem Stirnende des Einbauadapters abschließt.

7. Einbauadapter nach Anspruch 1, 2 oder 4, dadurch gekennzeichnet, daß eine Membranpartie (9) des Sensorteiles (2) gegenüber dem Stirnende des Einbauadapters zurückversetzt ist.

8. Einbauadapter nach einem der Ansprüche 1 bis 7, dadurch gekennzeichnet, daß ein zwischen Sensorteil (2) und Grundkörper (1) vorgesehener umfänglicher Spalt durch einen in einem der beiden Teile angeordneten Dichtring (4) abgedichtet ist.

9. Verfahren zum Herstellen eines Einbauadapters für Druckaufnehmer zur Messung des Druckes in einem Strömungsmedium, bei dem ein Sensorteil (2) in einen eine Durchgangspassage aufweisenden Grundkörper (1) angeordnet wird, so daß das Strömungsmedium auf den Sensorteil einwirken kann, um ein dem Mediumdruck entsprechendes elektrisches Signal zu liefern, und bei dem zwischen Sensorteil und Grundkörper eine Abdichtung vorgesehen wird, dadurch gekennzeichnet, daß am Sensorteil (2) und/oder Grundkörper (1) wenigstens eine im wesentlichen ringförmige Schweisserhöhung vorgesehen wird, daß bei der Montage des Sensorteiles im Grundkörper wenigstens ein ebener Stirnflächenbereich eines der beiden Teile mit einer gegenüberliegenden Schweisserhöhung am anderen Teil in Berührung gebracht wird, und daß an wenigstens einer der höchstens zwei an gegenüberliegenden Seiten des Sensorteiles gebildeten Paarungen aus ebenen Stirnflächenbereichen und Schweisserhöhungen eine mediumdichte Widerstandsschweissung (24,25,30) vorgenommen wird.

10. Verfahren nach Anspruch 9, dadurch gekennzeichnet, daß die Schweisserhöhungen im Querschnitt buckelförmig ausgebildet sind.

11. Verfahren nach Anspruch 9 oder 10, dadurch gekennzeichnet, daß Schweisserhöhungen an gegenüberliegenden Stirnseiten des Sensorteiles (2) vorgesehen sind.

12. Verfahren nach Anspruch 9 oder 10, dadurch gekennzeichnet, daß wenigstens eine der Schweisspaarungen einen ebenen Stirnflächenbereich am Sensorteil (2) und eine Schweisserhöhung an einer Absatzfläche (8) des Grundkörpers (1) umfasst.

13. Verfahren nach einem der Ansprüche 9 bis 12, dadurch gekennzeichnet, daß die Schweissung an der mediumzu-oder -abgewandten Seite des Sensorteiles (2) vorgenommen wird.

14. Verfahren nach einem der Ansprüche 9 bis 13, dadurch gekennzeichnet, daß auf die Schweissung eine Vorspannkraft ausgeübt wird.

15. Verfahren nach einem der Ansprüche 9 bis 14, dadurch gekennzeichnet, daß zur Vermeidung elektrischer Überschläge beim Schweissen ein Zentrierhilfsmittel (4) zur Einhaltung eines Spaltes zwischen Sensorteil (2) und Grundkörper (1) vorgesehen wird.

16. Druckaufnehmer, insbesondere Drucktransmitter, mit einem Elektronikteil, dadurch gekennzeichnet, daß er einen Einbauadapter nach einem der Ansprüche 1 bis 15 aufweist.

*Stand d. Technik*

*Stand d. Technik*

Fig. 1

Fig. 2

Fig. 3

Fig. 4

Fig. 5

Fig. 6

| | | |
|---|---|---|
| Europäisches Patentamt | **EUROPÄISCHER RECHERCHENBERICHT** | Nummer der Anmeldung |
| | | EP 87 10 4757 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 801 677 (HYDROTECHNIK GMBH) * Figur 1; Seite 8, Absatz 3 * --- | 1 | G 01 L 19/06 |
| A | DE-U-1 955 178 (FARBWERKE HOECHST AG) * Anspruch 3; Figur * ----- | | |
| | | | **RECHERCHIERTE SACHGEBIETE (Int. Cl.4)** |
| | | | G 01 L 19/00 |

Der vorliegende Recherchenbericht wurde für alle Patentansprüche erstellt

| Recherchenort | Abschlußdatum der Recherche | Prüfer |
|---|---|---|
| BERLIN | 23-11-1987 | KOEHN G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes Dokument

EPO FORM 1503 03.82 (P0403)